# EUROPEAN PATENT APPLICATION

(11) **EP 4 296 712 A1**
(43) Date of publication of application: **27.12.2023**
(21) Application number: 23179537.8
(22) Date of filing: 15.06.2023
(51) Int. Cl.: G01S 7/40

(54) **OBJECT DETECTION SYSTEM AND METHOD FOR IDENTIFYING FAULTS THEREIN**

(30) Priority: 22.06.2022 IN 202221035776
(71) Applicant: NXP B.V., 5656 AG Eindhoven (NL)
(72) Inventor: Khandelwal, Aditya, 5656AG Eindhoven (NL); Jain, Aarul, 5656AG Eindhoven (NL); Chaturvedi, Rupesh, 5656AG Eindhoven (NL)
(74) Representative: Hardingham, Christopher Mark

(57) **Abstract**

An object detection system that includes a transceiver and processing circuitry is disclosed. The transceiver receives a chirp wave reflected from a real object that is in the vicinity of the object detection system, and generates echo data based on the received chirp wave. The processing circuitry generates detection data that includes the echo data and target data associated with a virtual object. The target data is generated to identify a fault in the object detection system while the object detection system is operating in-field. Further, the target data is indicative of predefined parameters of the virtual object. The processing circuitry then processes the detection data to detect the virtual object and extract various parameters of the detected virtual object. Further, the processing circuitry identifies the fault in the object detection system based on a comparison of the extracted parameters with the predefined parameters.

## Description

### BACKGROUND

### FIELD OF THE DISCLOSURE

The present disclosure relates generally to electronic circuits, and, more particularly, to an object detection system and a method for identifying faults therein.

### DESCRIPTION OF THE RELATED ART

Object detection systems are widely implemented in vehicles to detect the presence of objects (e.g., other vehicles, pedestrians, or the like) in the vicinity of the vehicles. Such object detection systems are critical to the safety of the vehicles and the drivers driving the vehicles. However, the object detection systems may experience various faults while the vehicles are in motion. Such faults may result in inaccuracies in the operation of the object detection systems, and in turn, may cause damage to human life and property.

### BRIEF DESCRIPTION OF THE DRAWINGS

The following detailed description of the embodiments of the present disclosure will be better understood when read in conjunction with the appended drawings. The present disclosure is illustrated by way of example, and not limited by the accompanying figures, in which like references indicate similar elements.
FIG. 1 illustrates a schematic block diagram of an object detection environment in accordance with an embodiment of the present disclosure;
FIG. 2 illustrates a schematic block diagram of processing circuitry of the object detection environment of FIG. 1 in accordance with an embodiment of the present disclosure;
FIG. 3 illustrates a schematic block diagram of the processing circuitry in accordance with another embodiment of the present disclosure;
FIG. 4 illustrates a schematic block diagram of the processing circuitry in accordance with yet another embodiment of the present disclosure;
FIG. 5 illustrates a schematic block diagram of the processing circuitry in accordance with yet another embodiment of the present disclosure;
FIG. 6 represents a graph that illustrates an operation of an object detection system of the object detection environment of FIG. 1 in accordance with an embodiment of the present disclosure;
FIG. 7 represents a first flowchart that illustrates a method for identifying a fault in the object detection system in accordance with an embodiment of the present disclosure; and
FIG. 8 represents a second flowchart that illustrates a method for identifying the fault in the object detection system in accordance with another embodiment of the present disclosure.

### DETAILED DESCRIPTION OF EMBODIMENTS

The detailed description of the appended drawings is intended as a description of the embodiments of the present disclosure, and is not intended to represent the only form in which the present disclosure may be practiced. It is to be understood that the same or equivalent functions may be accomplished by different embodiments that are intended to be encompassed within the scope of the present disclosure.

In an embodiment of the present disclosure, an integrated circuit (IC) is disclosed. The IC may include an object detection system. The object detection system may include processing circuitry. The processing circuitry may be configured to generate detection data including echo data and target data. The echo data is associated with a real object, whereas the target data is associated with a virtual object. The echo data is derived from a chirp wave reflected from the real object, whereas the target data is generated to identify a fault in the object detection system. Further, the target data is indicative of a first set of parameters of the virtual object with respect to the object detection system. The processing circuitry may be further configured to process the detection data to detect the virtual object and extract a second set of parameters of the detected virtual object with respect to the object detection system. Further, the processing circuitry may be configured to identify the fault in the object detection system based on a comparison of the second set of parameters with the first set of parameters.

In another embodiment of the present disclosure, a method for identifying a fault in an object detection system is disclosed. The method may include generating detection data by processing circuitry of the object detection system. The detection data may include echo data that is associated with a real object and target data that is associated with a virtual object. The echo data is derived from a chirp wave reflected from the real object, whereas the target data is generated to identify the fault in the object detection system. Further, the target data is indicative of a first set of parameters of the virtual object with respect to the object detection system. The method may include processing the detection data by the processing circuitry to detect the virtual object and extract a second set of parameters of the detected virtual object with respect to the object detection system. Further, the method may include identifying the fault in the object detection system by the processing circuitry based on a comparison of the second set of parameters with the first set of parameters.

In some embodiments, the object detection system may further include a transceiver that may be coupled to the processing circuitry. The transceiver may be configured to receive the chirp wave reflected from the real object, generate the echo data based on the chirp wave, and transmit the echo data to the processing circuitry. The processing circuitry generates the detection data in response to the echo data. Each of the echo data and the target data may be represented in the form of a data cube.

In some embodiments, the detection data is generated and the fault is identified in the object detection system while the object detection system is operating in-field to detect the real obj ect.

In some embodiments, the processing circuitry may include an accelerator and a core circuit that may be coupled to the accelerator. The accelerator may be configured to process the detection data to detect the virtual object and extract the second set of parameters of the detected virtual object. Further, the core circuit may be configured to compare the second set of parameters with the first set of parameters and identify the fault in the object detection system based on the comparison of the second set of parameters with the first set of parameters.

In some embodiments, the processing circuitry may further include a memory and an interface circuit. The memory may be configured to store the first set of parameters or the target data. Further, the interface circuit may be configured to receive the echo data and translate the echo data to a format that adheres to an interface standard associated with the processing circuitry.

In some embodiments, the processing circuitry may further include a target controller that may be coupled to the memory, the interface circuit, and the accelerator. The target controller may be configured to receive the translated echo data. Further, the target controller may be configured to retrieve the first set of parameters from the memory and generate the target data based on the first set of parameters. The target controller may be further configured to superimpose the target data on the translated echo data to generate the detection data. In such a scenario, the first set of parameters may be stored in the memory while the object detection system is operating in-field to detect the real object.

In some embodiments, the interface circuit may be coupled to the memory and the accelerator. The interface circuit may be further configured to retrieve the target data from the memory and superimpose the target data on the translated echo data to generate the detection data.

In some embodiments, the accelerator may be coupled to the memory and the interface circuit. The accelerator may be further configured to receive the translated echo data, retrieve the target data from the memory, and superimpose the target data on the translated echo data to generate the detection data.

In some embodiments, the processing circuitry may further include an insertion circuit that may be coupled to the memory, the interface circuit, and the accelerator. The insertion circuit may be configured to receive the translated echo data, retrieve the target data from the memory, and superimpose the target data on the translated echo data to generate the detection data.

In some embodiments, the IC may further include a storage device that may be configured to store the target data. The object detection system may further include a direct memory access (DMA) controller that may be coupled to the memory of the processing circuitry and the storage device. The DMA controller may be configured to retrieve the target data from the storage device during a start-up of the object detection system and store the target data in the memory to facilitate the generation of the detection data.

In some embodiments, the first set of parameters may include at least one of a group consisting of a first distance, a first velocity, and a first angle of the virtual object with respect to the object detection system. Similarly, the second set of parameters may include at least one of a group consisting of a second distance, a second velocity, and a second angle of the virtual object with respect to the object detection system.

In some embodiments, the fault may be identified in the object detection system based on at least one of a group consisting of a mismatch between the first and second distances, a mismatch between the first and second velocities, and a mismatch between the first and second angles.

In some embodiments, the first distance may be greater than a range limit of the object detection system.

Conventionally, to identify faults in object detection systems, a virtual object (e.g., a self-test signal indicative of the virtual object) is utilized. For example, a transmitter of the object detection system generates the self-test signal, superimposes the self-test signal on a chirp signal, and broadcasts the superimposed signal. The broadcasted signal is reflected from a real object and received by a receiver of the object detection system. The reflected signal is then processed to determine whether the virtual object is accurately detected. Failure in the detection of the virtual object or inaccurate detection of the virtual object is indicative of a fault in the object detection system.

The conventional fault identification technique, however, has several disadvantages. For example, as the self-test signal is superimposed prior to the broadcast, a distance of the virtual object is required to be within a range limit of the object detection system. Such a requirement may cause interference for the object detection system and may result in inaccurate detection of the real object. Further, the superimposition is executed in an analog domain which results in the design complexity and the size of the object detection system being significant. Additionally, the afore-mentioned fault identification technique is exclusively implemented during a testing phase of the object detection system and not when the object detection system is operating in-field for its designated application.

Various embodiments of the present disclosure disclose an object detection system that includes a transceiver and processing circuitry. The transceiver receives a chirp wave that is reflected from a real object present in the vicinity of the object detection system (e.g., in the vicinity of a vehicle in which the object detection system is implemented). Based on the reflected chirp wave, the transceiver generates echo data and transmits the echo data to the processing circuitry. The processing circuitry translates the echo data to a format that adheres to an interface standard associated with the processing circuitry. Further, the processing circuitry generates detection data by superimposing target data, that is associated with a virtual object, on the translated echo data. The target data is indicative of a first set of parameters (e.g., a distance, a velocity, and an angle) of the virtual object with respect to the object detection system. Further, the processing circuitry processes the detection data to detect the virtual object and extract a second set of parameters of the detected virtual object with respect to the object detection system. The processing circuitry identifies the presence or absence of a fault in the object detection system based on a comparison of the second set of parameters with the first set of parameters.

In the object detection system of the present disclosure, the superimposition of the target data on the translated echo data is executed in a digital domain. As a result, the design complexity and the size of the object detection system of the present disclosure are less than that of an object detection system where the conventional fault identification technique is implemented. Further, as the virtual object is inserted (e.g., the target data is superimposed) at the processing stage of the object detection system, the distance of the virtual object may be greater than the range limit of the object detection system. As a result, interference for the object detection system and inaccuracies in the detection of real objects are prevented. Further, the fault identification technique of the present disclosure is implemented while the object detection system is operating in-field for its designated application (e.g., while the vehicle is in motion). Thus, a fault occurring in the field may be identified and corrected in the field.

In some embodiments, the step of generating the detection data comprises: translating, by an interface circuit of the processing circuitry, the echo data to a format that adheres to an interface standard associated with the processing circuitry; retrieving, by an accelerator of the processing circuitry, the target data from a memory of the processing circuitry; and superimposing, by the accelerator, the target data on the translated echo data to generate the detection data.

In some embodiments, the step of generating the detection data comprises: translating, by an interface circuit of the processing circuitry, the echo data to a format that adheres to an interface standard associated with the processing circuitry; retrieving, by a target controller of the processing circuitry, the first set of parameters from a memory of the processing circuitry; generating, by the target controller, the target data based on the first set of parameters; and superimposing, by the target controller, the target data on the translated echo data to generate the detection data.

In some embodiments the method further comprises receiving, by a transceiver of the object detection system, the chirp wave reflected from the real object; generating, by the transceiver, the echo data based on the chirp wave; and transmitting, by the transceiver, the echo data to the processing circuitry, wherein the detection data is generated by the processing circuitry in response to the echo data, and wherein each of the echo data and the target data is represented in form of a data cube.

In some embodiments, the detection data is generated and the fault is identified in the object detection system while the object detection system is operating in-field to detect the real obj ect.

In some embodiments, the first set of parameters comprises at least one of a group consisting of a first distance, a first velocity, and a first angle of the virtual object with respect to the object detection system, wherein the second set of parameters comprises at least one of a group consisting of a second distance, a second velocity, and a second angle of the virtual object with respect to the object detection system, and wherein the fault is identified in the object detection system based on at least one of a group consisting of (i) a mismatch between the first distance and the second distance, (ii) a mismatch between the first velocity and the second velocity, and (iii) a mismatch between the first angle and the second angle.

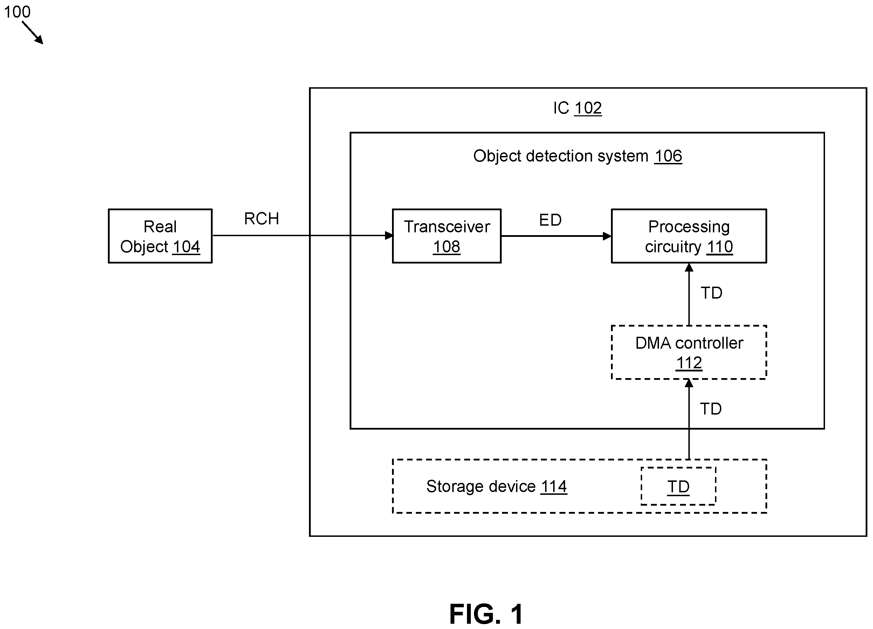

FIG. 1 illustrates a schematic block diagram of an object detection environment 100 in accordance with an embodiment of the present disclosure. The object detection environment 100 may include an integrated circuit (IC) 102 that may be implemented in a vehicle (not shown). Further, the object detection environment 100 may include a real object 104 that is in the vicinity of the vehicle (e.g., the IC 102). Examples of the real object 104 may include another vehicle, a pedestrian, a cyclist, a biker, a barricade, a divider, a pole, or the like.

The IC 102 may include an object detection system 106. The object detection system 106 is utilized in the vehicle to detect objects (such as the real object 104) that are in the vicinity of the vehicle. To detect the objects, the object detection system 106 may be configured to broadcast a chirp wave (not shown). The chirp wave may include a series of chirp signals. The broadcasted chirp wave is reflected from the real object 104 and the object detection system 106 may be further configured to receive a reflected chirp wave RCH. Based on the reflected chirp wave RCH, the object detection system 106 may be further configured to detect the real object 104 and extract various parameters of the real object 104 such as a distance, a velocity, and an angle of the real object 104 with respect to the vehicle. Further, based on the extracted parameters, various corrective measures may be executed to prevent a hazardous event (such as a collision of the vehicle with the real object 104). In an embodiment, the object detection system 106 is a continuous wave frequency-modulated (FMCW) radio detection and ranging (RADAR).

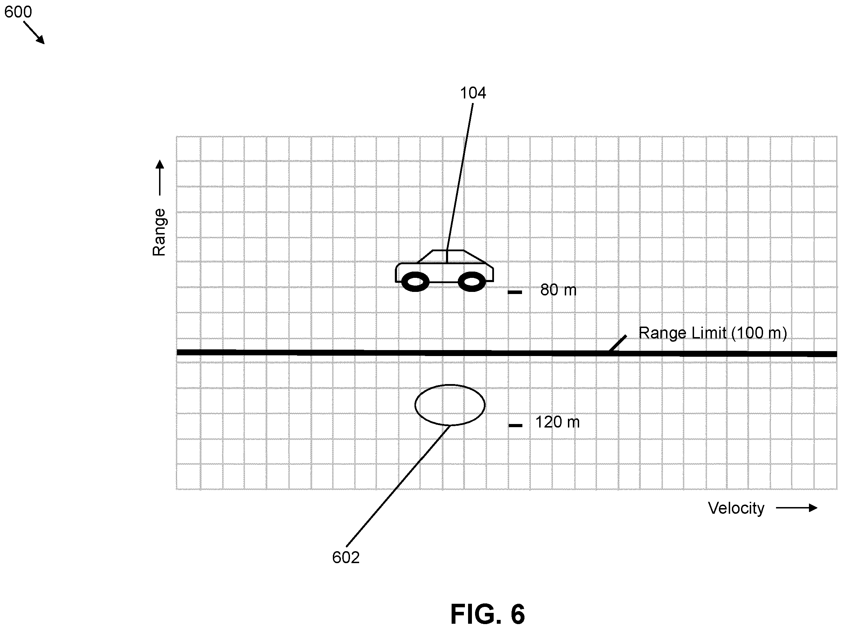

To ensure fault-free operation of the object detection system 106, a fault identification technique may be implemented by the object detection system 106 while the vehicle is in motion (e.g., while the object detection system 106 is operating in a functional mode). The fault identification technique includes inserting a virtual object (shown later in FIG. 6) with predefined parameters at a processing stage of the object detection system 106 and determining whether the virtual object is detected accurately post processing. In other words, the fault identification technique includes superimposing data indicative of the predefined parameters of the virtual object on data derived from the reflected chirp wave RCH, processing the superimposed data to detect the virtual object and extract parameters of the virtual object, and determining whether the extracted parameters match the predefined parameters. Failure to detect the virtual object or a mismatch between the extracted parameters and the predefined parameters is indicative of a presence of a fault in the object detection system 106. The detection of the real object 104 remains unaltered during the execution of the fault identification technique. In an event that the fault is identified in the object detection system 106, various corrective measures may be executed. The fault identification technique and the operation of the object detection system 106 are explained in detail below.

The object detection system 106 may include a transceiver 108 and processing circuitry 110 that may be coupled to the transceiver 108. The object detection system 106 may further include a direct memory access (DMA) controller 112 that may be coupled to the processing circuitry 110.

The transceiver 108 may include suitable circuitry that may be configured to perform one or more operations. For example, the transceiver 108 may be configured to generate the chirp wave and broadcast the chirp wave in the vicinity of the vehicle to detect various objects (e.g., the real object 104). A frequency of the broadcasted chirp wave may be in the range of 76 gigahertz (GHz) to 81 GHz. In an embodiment, the transceiver 108 may include a waveform generator (not shown) that may be configured to generate the chirp wave and a first set of antennas (not shown) that may be configured to broadcast the chirp wave.

The transceiver 108 may be further configured to receive the reflected chirp wave RCH that is reflected from the real object 104. In an embodiment, the transceiver 108 may include a second set of antennas (not shown) that may be configured to receive the reflected chirp wave RCH. Based on the reflected chirp wave RCH, the transceiver 108 may be further configured to generate echo data ED. Thus, the echo data ED is associated with the real object 104 and is derived from the reflected chirp wave RCH.

To generate the echo data ED, the transceiver 108 may execute various operations. For example, the transceiver 108 may be further configured to execute a mixing operation on the reflected chirp wave RCH and the broadcasted chirp wave and generate first and second intermediate signals (not shown). A frequency of the first intermediate signal is equal to a sum of the frequencies of the reflected chirp wave RCH and the broadcasted chirp wave, whereas a frequency of the second intermediate signal is equal to a difference between the frequencies of the reflected chirp wave RCH and the broadcasted chirp wave. Further, the transceiver 108 may be configured to execute a filtering operation on the first and second intermediate signals. In an embodiment, the filtering operation corresponds to a low pass filtering operation that filters out the first intermediate signal. The transceiver 108 may be further configured to execute an amplification operation on the second intermediate signal to generate an amplified signal (not shown). Further, the transceiver 108 may be configured to execute an analog-to-digital conversion operation on the amplified signal to generate the echo data ED, and transmit the echo data ED to the processing circuitry 110. In an embodiment, the transceiver 108 may include a mixer (not shown), a filter (not shown), a low noise amplifier (LNA) (not shown), and an analog-to-digital converter (ADC) (not shown) to generate the echo data ED.

The mixer may be configured to execute the mixing operation on the reflected chirp wave RCH and the broadcasted chirp wave and generate the first and second intermediate signals. The filter may be configured to execute the filtering operation on the first and second intermediate signals, whereas the LNA may be configured to execute the amplification operation on the second intermediate signal to generate the amplified signal. Further, the ADC may be configured to convert the amplified signal (e.g., an analog signal) to the echo data ED (e.g., digital data). Thus, the echo data ED may be represented in the form of a data cube (e.g., an ADC cube) and may be indicative of a beat frequency of the real object 104. The ADC may be further configured to transmit the echo data ED to the processing circuitry 110.

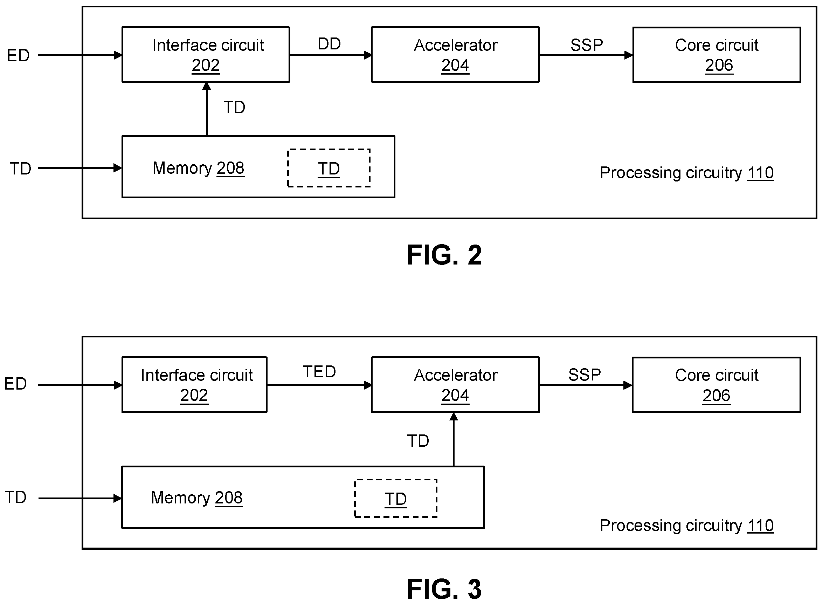

The processing circuitry 110 may be configured to receive the echo data ED from the transceiver 108 and translate the echo data ED from a default format to a format that adheres to an interface standard associated with the processing circuitry 110. In an embodiment, the interface standard may correspond to a standard defined by the Mobile Industry Processor Interface (MIPI) Camera Serial Interface (CSI) Alliance. The processing circuitry 110 thus generates translated echo data (shown later in FIGS. 3, 4, and 5).

The processing circuitry 110 may be further configured to generate detection data (shown later in FIGS. 2, 4, and 5) that includes the translated echo data and target data TD that is associated with the virtual object. In an embodiment, the processing circuitry 110 may be configured to superimpose the target data TD on the translated echo data to generate the detection data. In other words, the virtual object is superimposed into the data stream of the object detection system 106. The sampling executed by the ADC is such that multiple empty frequency bins exist in the echo data ED (e.g., the data cube). The virtual object may be inserted in such an empty frequency bin. The processing circuitry 110 thus generates the detection data in response to the receipt of the echo data ED from the transceiver 108. Further, the detection data is generated when the object detection system 106 is operating in-field to detect the real object 104.

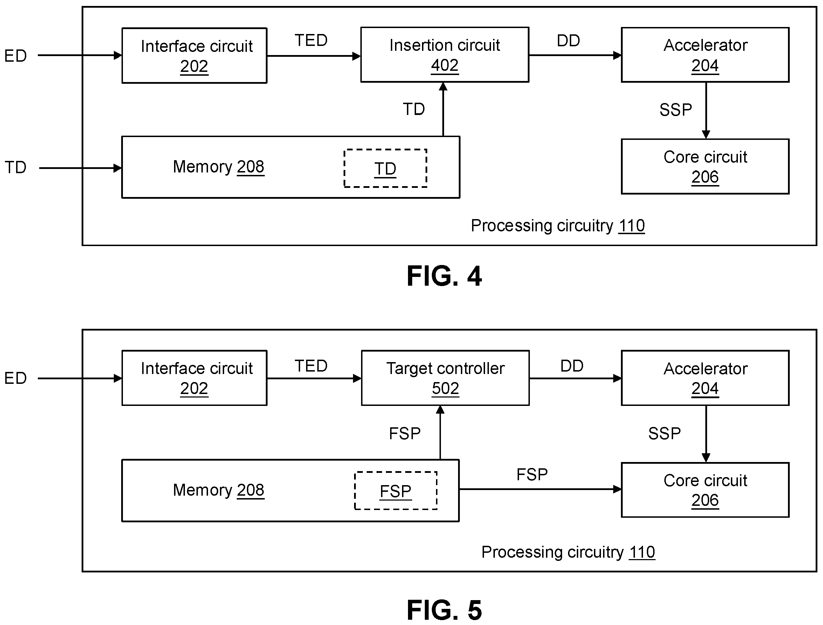

The target data TD is generated to identify the fault in the object detection system 106. As the target data TD is to be superimposed on the translated echo data, the target data TD may be represented in the form of the data cube (e.g., the ADC cube). Further, the target data TD is indicative of a first set of parameters (shown later in FIG. 5) of the virtual object with respect to the object detection system 106. The first set of parameters corresponds to the predefined parameters of the virtual object and may include a first distance, a first velocity, and a first angle of the virtual object with respect to the object detection system 106. As the virtual object (e.g., the target data TD) is inserted at the processing stage of the processing circuitry 110 (e.g., the target data TD is not derived from the chirp wave that is reflected from another real object), the first distance is not limited by a range limit of the object detection system 106. Thus, the first distance may be greater than the range limit of the object detection system 106. The range limit of the object detection system 106 is the maximum range within which an object may be detected by the object detection system 106 (e.g., the chirp wave may be reflected from the object).

The IC 102 may further include a storage device 114 that may be configured to store the target data TD. In such cases, a target data generator (not shown), that is external to the IC 102, may be configured to generate the target data TD and store the target data TD in the storage device 114. Examples of the storage device 114 may include a read-only memory (ROM), an erasable programmable ROM, an electrically erasable programmable ROM, or the like. The storage device 114 may be coupled to the object detection system 106 by way of the DMA controller 112. In such a scenario, during a start-up of the object detection system 106, the DMA controller 112 may be configured to retrieve the target data TD from the storage device 114 and store the target data TD in a memory (shown later in FIGS. 2-5) of the processing circuitry 110 to facilitate the generation of the detection data (e.g., for utilization in the fault identification).

The processing circuitry 110 may be further configured to process the detection data to detect the virtual object and extract a second set of parameters (shown later in FIGS. 2-5) of the detected virtual object with respect to the object detection system 106. The second set of parameters may include a second distance, a second velocity, and a second angle of the detected virtual object with respect to the object detection system 106.

To process the detection data, the processing circuitry 110 may execute various operations. For example, the processing circuitry 110 may be further configured to execute a set of transformation operations on the detection data to convert a time domain representation of the detection data to a frequency domain representation. The set of transformation operations may include a range fast Fourier transform (FFT) operation, a Doppler FFT operation, a multiple-input-multiple-output (MIMO) and beamforming operation, or the like. The frequency domain representation of the detection data may correspond to a RADAR cube. Further, the processing circuitry 110 may be configured to execute a set of detection operations on the frequency domain representation of the detection data to detect the virtual object and extract the second set of parameters of the virtual object. The set of detection operations may include a constant false alarm rate (CFAR) operation, a three-dimensional interpolation operation, or the like. The set of detection operations is executed to group multiple reflections from the same object. Although not described, the processing circuitry 110 may execute various tracking operations to track the detected objects in real-time.

The real object 104 may additionally be detected and various parameters of the real object 104 may additionally be extracted based on the processing of the detection data. The detection of the real object 104 and the extraction of the parameters of the real object 104 may be implemented simultaneously with the detection of the virtual object and the extraction of the second set of parameters of the virtual object.

The processing circuitry 110 may be further configured to compare the second set of parameters with the first set of parameters. Based on the comparison of the second set of parameters with the first set of parameters, the processing circuitry 110 may be further configured to identify the fault in the object detection system 106. For example, if the first and second sets of parameters match, it is concluded that the object detection system 106 is operating accurately and no fault exists in the object detection system 106. However, if there is a mismatch between the second set of parameters and the first set of parameters, it is concluded that the object detection system 106 is faulty. The process of comparing the second set of parameters with the first set of parameters includes comparing the second distance with the first distance, comparing the second velocity with the first velocity, and comparing the second angle with the first angle. In such a scenario, the fault is identified in the object detection system 106 based on a mismatch between the first and second distances, a mismatch between the first and second velocities, and/or a mismatch between the first and second angles. Thus, in the object detection system 106, the detection data is generated and the fault is identified while the object detection system 106 is operating in-field to detect the real object 104.

When the fault is identified in the object detection system 106, the processing circuitry 110 may be further configured to operate the object detection system 106 in a safe state to prevent a hazardous event and transmit a warning to a user of the object detection system 106 or a driver of the vehicle to warn of the fault in the object detection system 106. Additionally, the processing circuitry 110 may be configured to execute a recovery operation to recover the object detection system 106 from the fault.

The fault identification technique of the present disclosure may be implemented in conjunction with other hardware-based fault identification techniques such as a lockstep technique, a redundant execution technique, or the like. In such cases, the likelihood of detecting the fault in the object detection system 106 increases significantly, thereby ensuring the fault-free operation of the object detection system 106.

Variations in the object detection environment 100 of FIG. 1:
In a first variation, the processing circuitry 110 may be configured to generate the target data TD in real-time instead of the target data TD being pre-stored in the storage device 114. The processing circuitry 110 may generate the target data TD based on the first set of parameters stored in the memory while the object detection system 106 is operating in-field to detect the real object 104. In such a scenario, the IC 102 may operate independent of the storage device 114, and the DMA controller 112 is not required to execute the data transfer operation.

In a second variation, each of the first and second sets of parameters may not be limited to distance, velocity, and angle, and may include other parameters (*e.g*. power, RADAR cross-section (RCS), or the like) associated with the objects (*e.g.,* the virtual object).

In a third variation, instead of one real object and one virtual object, multiple real objects and multiple virtual objects may be simultaneously detected by the object detection system 106 in a similar manner as described above.

In a fourth variation, the virtual object may be inserted before the execution of the translation operation or after the execution of the set of transformation operations. In such a scenario, the target data TD may be modified to adhere to the same representation as the data on which the target data TD is to be superimposed.

FIG. 2 illustrates a schematic block diagram of the processing circuitry 110 in accordance with an embodiment of the present disclosure. The processing circuitry 110 may include an interface circuit 202, an accelerator 204, a core circuit 206, and the memory (hereinafter designated as the "memory 208"). The memory 208 may be configured to store the target data TD. The target data TD may be stored in the memory 208 by the DMA controller 112 during the start-up of the object detection system 106. In an example, the memory 208 corresponds to a random access memory.

The interface circuit 202 may be coupled to the transceiver 108 and the memory 208. The interface circuit 202 may include suitable circuitry that may be configured to perform one or more operations. For example, the interface circuit 202 may be configured to receive the echo data ED from the transceiver 108 and translate the echo data ED from the default format to the format that adheres to the interface standard associated with the processing circuitry 110. The interface circuit 202 thus generates the translated echo data. Further, the interface circuit 202 may be configured to retrieve the target data TD from the memory 208 and superimpose the target data TD on the translated echo data to generate the detection data (hereinafter designated as the "detection data DD"). In an example, the interface circuit 202 corresponds to a MIPI CSI controller.

The accelerator 204 may be coupled to the interface circuit 202. The accelerator 204 may include suitable circuitry that may be configured to perform one or more operations. For example, the accelerator 204 may be configured to receive the detection data DD from the interface circuit 202. Further, the accelerator 204 may be configured to process the detection data DD to detect the virtual object and extract the second set of parameters (hereinafter designated as the "second set of parameters SSP") of the detected virtual object. To process the detection data DD, the accelerator 204 may be further configured to execute the set of transformation operations on the detection data DD to convert the time domain representation of the detection data DD to the frequency domain representation. Further, the accelerator 204 may be configured to execute the set of detection operations on the frequency domain representation of the detection data DD to detect the virtual object and extract the second set of parameters SSP of the detected virtual object. In an example, the accelerator 204 corresponds to a digital signal processor.

The core circuit 206 may be coupled to the accelerator 204. The core circuit 206 may include suitable circuitry that may be configured to perform one or more operations. For example, the core circuit 206 may be configured to receive the second set of parameters SSP from the accelerator 204. Additionally, the first set of parameters of the virtual object may be precoded in the core circuit 206 during the start-up of the object detection system 106. The core circuit 206 may be further configured to compare the second set of parameters SSP with the first set of parameters and identify the fault in the object detection system 106 based on the comparison of the second set of parameters SSP with the first set of parameters. When the fault is identified in the object detection system 106, the core circuit 206 may be further configured to operate the object detection system 106 in the safe state and transmit the warning to the user of the object detection system 106 or the driver of the vehicle to warn of the fault in the object detection system 106. Additionally, the core circuit 206 may be further configured to execute the recovery operation to recover the object detection system 106 from the fault.

FIG. 3 illustrates a schematic block diagram of the processing circuitry 110 in accordance with another embodiment of the present disclosure. The processing circuitry 110 may include the interface circuit 202, the accelerator 204, the core circuit 206, and the memory 208. The memory 208 may be configured to store the target data TD. The target data TD may be stored in the memory 208 by the DMA controller 112 during the start-up of the object detection system 106.

The difference between the processing circuitry 110 of FIG. 3 and the processing circuitry 110 of FIG. 2 is that, in the processing circuitry 110 of FIG. 3, the detection data DD is generated by the accelerator 204 instead of the interface circuit 202. Thus, the interface circuit 202 may be configured to receive the echo data ED from the transceiver 108, and generate the translated echo data (hereinafter designated as the "translated echo data TED") based on the echo data ED in the above-mentioned manner. Further, the accelerator 204 may be coupled to the interface circuit 202 and the memory 208. The accelerator 204 may be configured to receive the translated echo data TED from the interface circuit 202 and retrieve the target data TD from the memory 208. Further, the accelerator 204 may be configured to superimpose the target data TD on the translated echo data TED to generate the detection data DD. The accelerator 204 may be further configured to process the detection data DD to detect the virtual object and extract the second set of parameters SSP of the detected virtual object. The accelerator 204 may be further configured to transmit the second set of parameters SSP to the core circuit 206 to facilitate the identification of the fault in the object detection system 106. The operations of the core circuit 206 remain the same as described above in FIG. 2.

FIG. 4 illustrates a schematic block diagram of the processing circuitry 110 in accordance with yet another embodiment of the present disclosure. The processing circuitry 110 may include the interface circuit 202, an insertion circuit 402, the accelerator 204, the core circuit 206, and the memory 208. The memory 208 may be configured to store the target data TD.

The target data TD may be stored in the memory 208 by the DMA controller 112 during the start-up of the object detection system 106.

The difference between the processing circuitry 110 of FIG. 4 and the processing circuitry 110 of FIG. 2 is that, in the processing circuitry 110 of FIG. 4, the detection data DD is generated by the insertion circuit 402 instead of the interface circuit 202. Thus, the interface circuit 202 may be configured to receive the echo data ED from the transceiver 108, and generate the translated echo data TED based on the echo data ED as described in FIG. 2. Further, the insertion circuit 402 may be coupled to the interface circuit 202, the memory 208, and the accelerator 204. The insertion circuit 402 may be configured to receive the translated echo data TED from the interface circuit 202 and retrieve the target data TD from the memory 208. Further, the insertion circuit 402 may be configured to superimpose the target data TD on the translated echo data TED to generate the detection data DD and transmit the detection data DD to the accelerator 204. The accelerator 204 may be further configured to process the detection data DD to detect the virtual object and extract the second set of parameters SSP of the detected virtual object, and transmit the second set of parameters SSP to the core circuit 206 to facilitate the identification of the fault in the object detection system 106. The operations of the core circuit 206 remain the same as described above in FIG. 2.

FIG. 5 illustrates a schematic block diagram of the processing circuitry 110 in accordance with yet another embodiment of the present disclosure. The processing circuitry 110 may include the interface circuit 202, a target controller 502, the accelerator 204, the core circuit 206, and the memory 208.

The difference between the processing circuitry 110 of FIG. 5 and the processing circuitry 110 of FIG. 2 is that, in the processing circuitry 110 of FIG. 5, the target data TD is generated in real-time instead of being stored in the memory 208 by the DMA controller 112 during the start-up of the object detection system 106. Additionally, the detection data DD is generated by the target controller 502 instead of the interface circuit 202. The operations of various components of the processing circuitry 110 of FIG. 5 are explained below.

The interface circuit 202 may be configured to receive the echo data ED from the transceiver 108, and generate the translated echo data TED based on the echo data ED as described in FIG. 2. Further, in the processing circuitry 110 of FIG. 5, the memory 208 may be configured to store the first set of parameters (hereinafter designated as the "first set of parameters FSP") instead of the target data TD. In an embodiment, the first set of parameters FSP is stored in the memory 208 by the target data generator. Further, the first set of parameters FSP may be stored in the memory 208 while the object detection system 106 is operating in-field to detect the real object 104. As a result, the first set of parameters FSP may be varied to increase the fault coverage provided by the fault identification technique of the present disclosure.

The target controller 502 may be coupled to the interface circuit 202, the memory 208, and the accelerator 204. The target controller 502 may include suitable circuitry that may be configured to perform one or more operations. For example, the target controller 502 may be configured to receive the translated echo data TED from the interface circuit 202. When the translated echo data TED is received, the target controller 502 may be further configured to retrieve the first set of parameters FSP from the memory 208 and generate the target data TD based on the first set of parameters FSP. Further, the target controller 502 may be configured to superimpose the target data TD on the translated echo data TED to generate the detection data DD and transmit the detection data DD to the accelerator 204.

The accelerator 204 may be configured to process the detection data DD to detect the virtual object and extract the second set of parameters SSP of the detected virtual object, and transmit the second set of parameters SSP to the core circuit 206 to facilitate the identification of the fault in the object detection system 106. The operations of the core circuit 206 remain the same as described above in FIG. 2 except that the core circuit 206 may be coupled to the memory 208, and may be configured to retrieve the first set of parameters FSP from the memory 208 prior to the comparison.

Although FIGS. 2-5 describe direct data communication between various components, the scope of the present disclosure is not limited to it. In various other embodiments, data generated by one component may be stored in the memory 208, and the component requiring the data may retrieve the data from the memory 208. For example, in the processing circuitry 110 of FIG. 2, the interface circuit 202 may store the detection data DD in the memory 208, and the accelerator 204 may retrieve the detection data DD from the memory 208 for processing the detection data DD.

FIG. 6 represents a graph 600 that illustrates an operation of the object detection system 106 in accordance with an embodiment of the present disclosure. In an example illustrated in FIG. 6, the range limit of the object detection system 106 is 100 meters (m). Further, the first distance defined for the virtual object (hereinafter designated as the "virtual object 602") is 120 m. The graph 600 illustrates various objects detected by the processing circuitry 110 based on the processing of the detection data DD. As illustrated in FIG. 6, the real object 104 is detected to be present at a distance of 80 m from the object detection system 106. Similarly, the virtual object 602 is detected to be present at a distance of 120 m from the object detection system 106. As the predefined distance matches the distance determined in real-time, the object detection system 106 may be considered fault-free.

The graph 600 describes the distances of the objects with velocity being the same to make the illustrations concise and clear and should not be considered as a limitation of the present disclosure. In various other embodiments, the graph 600 may be a three-dimensional representation illustrating different distances, velocities, and angles of various objects with respect to the object detection system 106, respectively.

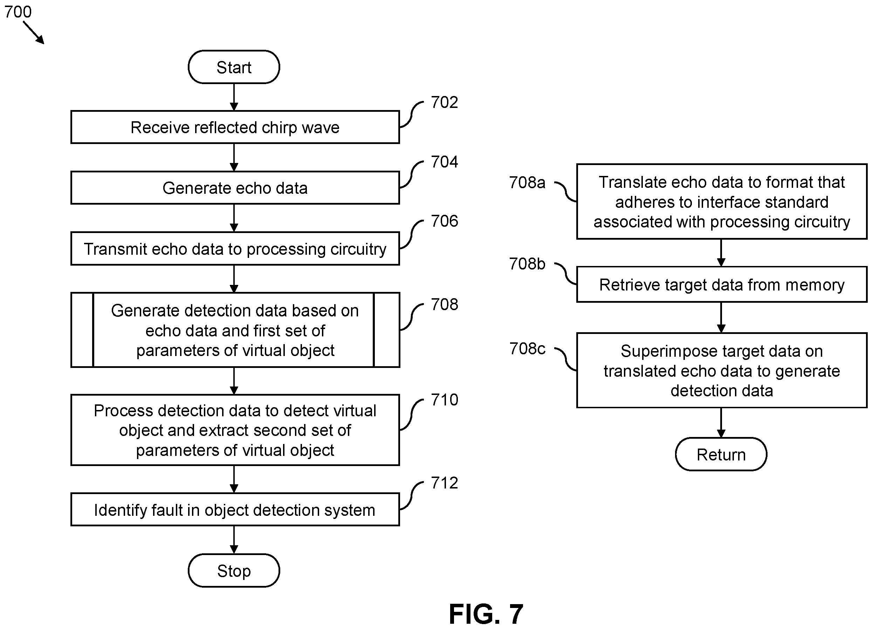

FIG. 7 represents a first flowchart 700 that illustrates a method for identifying the fault in the object detection system 106 in accordance with an embodiment of the present disclosure. At step 702, the transceiver 108 may receive the reflected chirp wave RCH. The reflected chirp wave RCH corresponds to the broadcasted chirp wave that is reflected from the real object 104. At step 704, the transceiver 108 may generate the echo data ED based on the reflected chirp wave RCH. At step 706, the transceiver 108 may transmit the echo data ED to the processing circuitry 110.

At step 708, the processing circuitry 110 may generate the detection data DD based on the echo data ED and the first set of parameters FSP of the virtual object 602. To generate the detection data DD, various components of the processing circuitry 110 may execute one or more operations. For example, at step 708a, the interface circuit 202 of the processing circuitry 110 may translate the echo data ED to the format that adheres to the interface standard associated with the processing circuitry 110. At step 708b, the accelerator 204 of the processing circuitry 110 may retrieve the target data TD from the memory 208 of the processing circuitry 110. The target data TD may be indicative of the first set of parameters FSP of the virtual object 602. The first set of parameters FSP may include the first distance, the first velocity, and the first angle of the virtual object 602 with respect to the object detection system 106. The target data TD may be stored in the memory 208 by the DMA controller 112 during the start-up of the object detection system 106. At step 708c, the accelerator 204 may superimpose the target data TD on the translated echo data TED to generate the detection data DD. Thus, the detection data DD includes the echo data ED and the target data TD.

The scope of the present disclosure is not limited to the generation of the detection data DD as described in the first flowchart 700. In various other embodiments, the detection data DD may be generated by different combinations of the components of the processing circuitry 110 as described in FIG. 2 and FIG. 4.

At step 710, the processing circuitry 110 (*e.g*., the accelerator 204) may process the detection data DD to detect the virtual object 602 and extract the second set of parameters SSP of the detected virtual object 602. The second set of parameters SSP may include the second distance, the second velocity, and the second angle of the virtual object 602 with respect to the object detection system 106. At step 712, the processing circuitry 110 (*e.g*., the core circuit 206) may identify the fault in the object detection system 106 based on the comparison of the second set of parameters SSP with the first set of parameters FSP. The fault is identified in the object detection system 106 based on at least one of a mismatch between the first and second distances, a mismatch between the first and second velocities, and a mismatch between the first and second angles. Thus, the detection data DD is generated and the fault is identified in the object detection system 106 while the object detection system 106 is operating in-field to detect the real object 104.

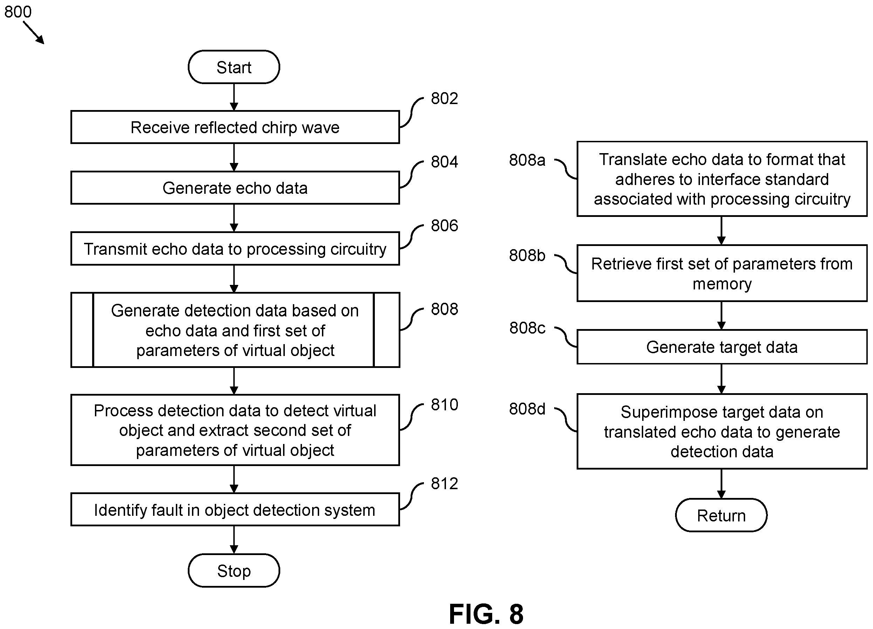

FIG. 8 represents a second flowchart 800 that illustrates a method for identifying the fault in the object detection system 106 in accordance with another embodiment of the present disclosure.

Steps 802, 804, 806, 810, and 812 of the second flowchart 800 are the same as steps 702, 704, 706, 710, and 712 of the first flowchart 700, respectively. The difference between the second flowchart 800 of FIG. 8 and the first flowchart 700 of FIG. 7 is that the generation of the detection data DD described in step 808 (e.g., steps 808a-808d) of the second flowchart 800 is different from that described in step 708 (*e.g*., steps 708a-708c) of the first flowchart 700.

At step 808, the processing circuitry 110 may generate the detection data DD based on the echo data ED and the first set of parameters FSP of the virtual object 602. To generate the detection data DD, various components of the processing circuitry 110 may execute one or more operations. For example, at step 808a, the interface circuit 202 of the processing circuitry 110 may translate the echo data ED to the format that adheres to the interface standard associated with the processing circuitry 110. At step 808b, the target controller 502 of the processing circuitry 110 may retrieve the first set of parameters FSP from the memory 208 of the processing circuitry 110. The first set of parameters FSP may be stored in the memory 208 while the object detection system 106 is operating in-field to detect the real object 104. At step 808c, the target controller 502 may generate the target data TD based on the first set of parameters FSP. At step 808d, the target controller 502 may superimpose the target data TD on the translated echo data TED to generate the detection data DD. Conventionally, to identify faults in object detection systems, a self-test signal indicative of a virtual object is utilized. For example, a transmitter of the object detection system generates the self-test signal, superimposes the self-test signal on a chirp signal, and broadcasts the superimposed signal. The broadcasted signal is reflected from a real object and received by a receiver of the object detection system. The reflected signal is then processed to determine whether the virtual object is accurately detected. Failure in the detection of the virtual object or inaccurate detection of the virtual object is indicative of a fault in the object detection system. Such a fault identification technique, however, has several disadvantages. For example, as the self-test signal is superimposed prior to the broadcast, a distance of the virtual object is required to be within a range limit of the object detection system, thereby causing interference for the object detection system and resulting in inaccurate detection of the real object. Further, the superimposition is executed in an analog domain. As a result, the design complexity and the size of the object detection system are significant. Additionally, the fault identification technique is exclusively implemented during the testing phase of the object detection system.

In the object detection system 106, the superimposition of the target data TD on the translated echo data TED is executed at the processing stage of the object detection system 106 and in a digital domain. As a result, the design complexity and the size of the object detection system 106 are less than that of an object detection system where the conventional fault identification technique is implemented. Further, the first distance of the virtual object 602 may be greater than the range limit of the object detection system 106, thereby preventing the interference for the object detection system 106 and inaccuracies in the detection of the real object 104. The fault identification technique of the present disclosure is implemented while the object detection system 106 is operating in-field for its designated application (*e.g*., while the vehicle is in motion). Thus, a fault occurring in the field is identified and corrected in the field.

While various embodiments of the present disclosure have been illustrated and described, it will be clear that the present disclosure is not limited to these embodiments only. Numerous modifications, changes, variations, substitutions, and equivalents will be apparent to those skilled in the art, without departing from the scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

## Claims

1. An integrated circuit, IC, comprising:
an object detection system, wherein the object detection system comprises:
processing circuitry configured to:
generate detection data comprising (i) echo data that is associated with a real object and (ii) target data that is associated with a virtual object, wherein the echo data is derived from a chirp wave reflected from the real object, and wherein the target data is generated to identify a fault in the object detection system and is indicative of a first set of parameters of the virtual object with respect to the object detection system;
process the detection data to detect the virtual object and extract a second set of parameters of the detected virtual object with respect to the object detection system;
and
identify the fault in the object detection system based on a comparison of the second set of parameters with the first set of parameters.

2. The IC of claim 1, wherein the object detection system further comprises a transceiver that is coupled to the processing circuitry, and configured to:
receive the chirp wave reflected from the real object;
generate the echo data based on the chirp wave; and
transmit the echo data to the processing circuitry, wherein the processing circuitry generates the detection data in response to the echo data, and wherein each of the echo data and the target data is represented in form of a data cube.

3. The IC of claim 1 or 2, wherein the detection data is generated and the fault is identified in the object detection system while the object detection system is operating in-field to detect the real object.

4. The IC of any preceding claim, wherein the processing circuitry comprises:
an accelerator configured to process the detection data to detect the virtual object and extract the second set of parameters of the detected virtual object; and
a core circuit that is coupled to the accelerator, and configured to:
compare the second set of parameters with the first set of parameters; and
identify the fault in the object detection system based on the comparison of the second set of parameters with the first set of parameters.

5. The IC of claim 4, wherein the processing circuitry further comprises:
a memory configured to store the first set of parameters;
an interface circuit configured to receive the echo data and translate the echo data to a format that adheres to an interface standard associated with the processing circuitry; and
a target controller that is coupled to the memory, the interface circuit, and the accelerator, and configured to:
receive the translated echo data;
retrieve the first set of parameters from the memory;
generate the target data based on the first set of parameters; and
superimpose the target data on the translated echo data to generate the detection data.

6. The IC of claim 5, wherein the first set of parameters is stored in the memory while the object detection system is operating in-field to detect the real object.

7. The IC of any of claims 4 to 6, wherein the processing circuitry further comprises:
a memory configured to store the target data; and
an interface circuit that is coupled to the memory and the accelerator, and configured to:
receive the echo data;
translate the echo data to a format that adheres to an interface standard associated with the processing circuitry;
retrieve the target data from the memory; and
superimpose the target data on the translated echo data to generate the detection data.

8. The IC of any of claims 4 to 7, wherein the processing circuitry further comprises (i) a memory configured to store the target data and (ii) an interface circuit configured to receive the echo data and translate the echo data to a format that adheres to an interface standard associated with the processing circuitry, and wherein the accelerator is coupled to the memory and the interface circuit, and further configured to:
receive the translated echo data;
retrieve the target data from the memory; and
superimpose the target data on the translated echo data to generate the detection data.

9. The IC of any of claims 4 to 8, wherein the processing circuitry further comprises:
a memory configured to store the target data;
an interface circuit configured to receive the echo data and translate the echo data to a format that adheres to an interface standard associated with the processing circuitry; and
an insertion circuit that is coupled to the memory, the interface circuit, and the accelerator, and configured to:
receive the translated echo data;
retrieve the target data from the memory; and
superimpose the target data on the translated echo data to generate the detection data.

10. The IC of any preceding claim, further comprising a storage device,
wherein the storage device is configured to store the target data,
wherein the processing circuitry further comprises a memory,
wherein the object detection system further comprises a direct memory access (DMA) controller that is coupled to the memory and the storage device, and
wherein the DMA controller is configured to (i) retrieve the target data from the storage device during a start-up of the object detection system and (ii) store the target data in the memory to facilitate the generation of the detection data.

11. The IC of any preceding claim, wherein the first set of parameters comprises at least one of a group consisting of a first distance, a first velocity, and a first angle of the virtual object with respect to the object detection system, and wherein the second set of parameters comprises at least one of a group consisting of a second distance, a second velocity, and a second angle of the virtual object with respect to the object detection system.

12. The IC of claim 11, wherein the fault is identified in the object detection system based on at least one of a group consisting of (i) a mismatch between the first distance and the second distance, (ii) a mismatch between the first velocity and the second velocity, and (iii) a mismatch between the first angle and the second angle.

13. The IC of claim 11 or 12, wherein the first distance is greater than a range limit of the object detection system.

14. The IC of any preceding claim, wherein to process the detection data, the processing circuitry is further configured to:
execute a set of transformation operations on the detection data to convert a time domain representation of the detection data to a frequency domain representation; and
execute a set of detection operations on the frequency domain representation of the detection data to detect the virtual object and extract the second set of parameters of the virtual object.

15. A method for identifying a fault in an object detection system, the method comprising:
generating, by processing circuitry of the object detection system, detection data, wherein the detection data comprises (i) echo data that is associated with a real object and (ii) target data that is associated with a virtual object, wherein the echo data is derived from a chirp wave reflected from the real object, and wherein the target data is generated to identify the fault in the object detection system and is indicative of a first set of parameters of the virtual object with respect to the object detection system;
processing, by the processing circuitry, the detection data to detect the virtual object and extract a second set of parameters of the detected virtual object with respect to the object detection system; and
identifying, by the processing circuitry, the fault in the object detection system based on a comparison of the second set of parameters with the first set of parameters.
